# EUROPEAN PATENT SPECIFICATION

(11) **EP 3 362 677 B1**
(45) Date of publication and mention of the grant of the patent: **14.10.2020**
(21) Application number: 15906193.6
(22) Date of filing: 15.10.2015
(51) Int. Cl.: F03B 13/18, E02B 9/08, F03B 13/26

(54) **FLOW CONTROL ARRANGEMENT IN A WAVE ENERGY RECOVERY APPARATUS**
STRÖMUNGSREGLERANORDNUNG IN EINER WELLENENERGIEGEWINNUNGSVORRICHTUNG
AGENCEMENT DE COMMANDE D'ÉCOULEMENT DANS UN APPAREIL DE RÉCUPÉRATION D'ÉNERGIE HOULOMOTRICE

(43) Date of publication of application: 22.08.2018
(73) Proprietor: AW-Energy Oy, 01380 Tikkurila (FI)
(72) Inventor: JÄRVINEN, Arvo, FI-01230 Vantaa (FI); RIDGEWELL, Christopher, FI-00170 Helsinki (FI)
(74) Representative: Salomäki, Juha Kari Ensio
(86) International application number: PCT/FI2015/050699
(87) International publication number: WO 2017/064359

(56) References cited:
- WO-A1-2008/111849
- WO-A1-2012/053899
- CN-A- 102 720 627
- GB-A- 2 480 325

## Description

The present invention relates to a flow control arrangement in a wave energy recovery apparatus as defined in the preamble of claim 1.

The wave energy recovery apparatus according to the invention is suited very well for instance to be used in connection with panels or flaps or essentially platelike wing elements, later called shorter only as panels, hinged with its lower edge to make a reciprocating movement caused by wave energy or tidal energy of seawater as shown for example in the international patent publications No. WO03/036081 A1 and No. WO2011/121167 A1. The wave energy or tidal energy collected is further converted with a conversion unit for instance to electric energy, fresh water or hydrogen. For the sake of simplicity, only the term wave energy is later mentioned when both the wave energy and the tidal energy of seawater are meant.

According to prior art there are various types of wave energy recovery systems where the arrangements include a heavy base and, for instance, one or more panels pivotally connected to the base to make a reciprocating or oscillating movement about a rotation axis or pivot axis in response to wave forces or tidal forces as shown for example in the international patent publications No. WO9817911 A1 and WO2004007953 A1 or in the patent publication GB 2480325 A. The solutions show a wave energy recovery arrangement where the reciprocating panel is hinged with its lower edge on a heavy base that is placed on the bottom of the seabed. A problem with the installations like these is the difficulty to control the water flow in different sea conditions, which causes loss of capacity in capturing wave energy. Another problem is the preparation of the sea bottom for the heavy base. If the sea bottom is not flat enough or is otherwise difficult to make suitable for the base to install in its place, the preparation takes additional time and also causes additional costs. Yet another problem with the arrangements according to prior art mentioned above is the limited depth of sea where the arrangement can be installed. At the same time that means limited places of installation because these arrangements can be installed only quite near the shore where the depth of the sea is not too big.

The object of the present invention is to eliminate the drawbacks described above and to achieve a reliable, compact, economical and efficient wave energy conversion apparatus in order to be able to capture a maximum amount of available wave or tidal energy and which apparatus is easily and in a versatile way controllable. Another object of the present invention is to achieve an arrangement where the water flow is easily controllable in all kind of sea conditions so that, for example, in stormy weather a part of the wave energy can be guided to pass the reciprocating panel and in still sea conditions as much wave energy as possible can be captured. Yet another object of the present invention is to add possible places of installation so that the arrangement can also be installed in deeper water than earlier. The flow control arrangement in a wave energy conversion apparatus according to the invention is characterized by what is presented in the characterization part of claim 1. Other embodiments of the invention are characterized by what is presented in the other claims.

The arrangement according to the invention is defined by the appended claims.

The solution of the invention has a number of advantages. The solution makes it possible to affect to the field of water flow so that as much wave energy as possible can be captured in all kind of sea conditions. In that case, for example, in stormy sea conditions a part of the wave energy can be guided to pass the reciprocating panel and in still sea conditions as much wave energy as possible can be guided towards the reciprocating panel. Another advantage is a possibility to install the arrangement in its production site without preparing the sea bottom. That makes installation easier and faster and therefore also installation costs can be lower. Yet another advantage is a possibility to install the arrangement in its production site in deeper water than usually when the usable water depth has been about 20 meters. The invention makes it possible to install the arrangement also in locations where the depth of the water is even 50 meters or even bigger. All in all the arrangement of the invention makes it possible to increase the number of possible installation locations.

In the following, the invention will be described in detail by the aid of examples by referring to the attached simplified and diagrammatic drawings, wherein
- Fig. 1: presents a simplified oblique top view of a wave energy recovery apparatus according to the arrangement of the invention, where the arrangement has been installed on relatively short piles rammed into the sea bottom,
- Fig. 2: presents in a side view and in a simplified and diagrammatic way a wave energy recovery arrangement according to Fig. 1 without power-take-off (PTO) units,
- Fig. 3: presents in a side view and in a simplified and diagrammatic way another type of arrangement according to the invention, where the heavy gravitation base has been installed into the sea bottom,
- Fig. 4: presents in a side view and in a simplified and diagrammatic way yet another type of arrangement according to the invention, where the heavy gravitational base has been anchored onto the surface of the sea bottom,
- Fig. 5: presents in a side view and in a simplified and diagrammatic way yet another type of arrangement according to the invention, where the arrangement is supported by the conical piles embedded into the sea bottom,
- Fig. 6: presents in a side view and in a simplified and diagrammatic way yet another type of arrangement according to the invention, where the lightweight floating base has been anchored in the sea bottom,
- Fig. 7: presents in a side view and in a simplified and diagrammatic way yet another type of arrangement according to the invention, where the arrangement is movably supported by long piles rammed into the sea bottom,
- Fig. 8: presents in a side view and in a simplified and diagrammatic way yet another type of arrangement according to the invention, where the arrangement is movably supported by long piles installed on a separate base on the sea bottom,
- Fig. 9: presents in a side view and in a simplified and diagrammatic way yet another type of arrangement according to the invention, where the arrangement is movably supported by long piles installed on a separate floating base that is anchored into the sea bottom,
- Fig. 10: presents in a side view and in a simplified and diagrammatic way yet another type of arrangement according to the invention, where the flow control plate under the panel is supported by a group of hydraulic cylinders,
- Figs. 11-16: present in a side view and in a simplified and diagrammatic way the arrangement according to Fig. 10, where the flow control plate is in different control positions or forms,
- Fig. 17: presents in a side view and in a simplified and diagrammatic way yet another type of arrangement according to the invention, where the arrangement is supported by the conical piles embedded into the sea bottom, and where the foremost PTO unit has been removed,
- Fig. 18: presents in a top view and in a simplified and diagrammatic way the arrangement according to Fig. 17, and
- Fig. 19: presents in a front view and in a simplified and diagrammatic and partially sectioned the arrangement according to Fig. 17.

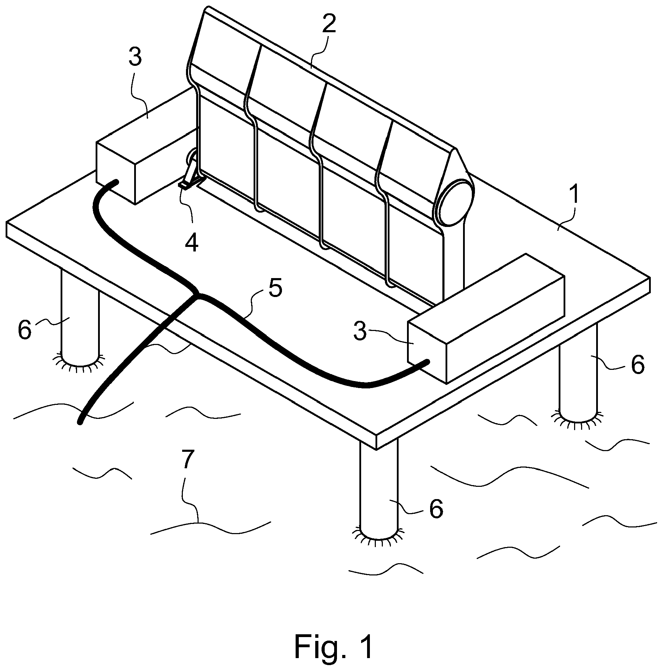

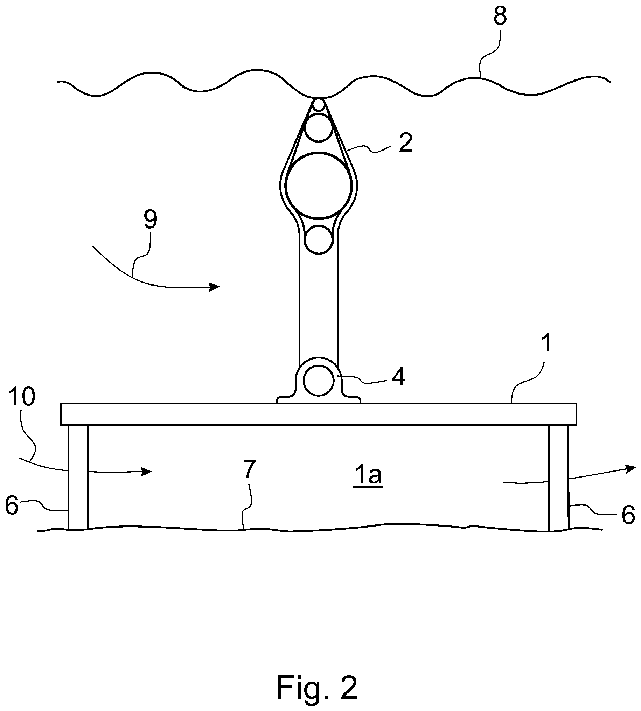

Figs. 1 and 2 present a wave energy recovery apparatus according to the arrangement of the invention in two different views. The wave energy recovery apparatus according to the example comprises a first base 1 called also as a bottom plate 1 that acts as a flow control plate, a panel 2 reciprocating about its pivot shaft installed on bearings 4 supported by the bottom plate 1, two power-take-off (PTO) units 3 having a connection mechanism to connect the PTO units 3 to the pivot shaft of the reciprocating panel 2 at both ends of the pivot shaft, and piles 6, for instance at each of four corners of the bottom plate 1 supported by the sea bottom 7. The pivot shaft it at the lower edge of the panel 2 when the panel 2 is in its vertical position. The apparatus comprises also a supply means 5 to provide the wave energy captured to further use.

Supported by the bottom plate 1 the reciprocating panel 2 oscillates back and forth with the movement of seawater or the water flow for recovering kinetic energy like wave energy of seawater. The reciprocating motion of the panel 2 is forwarded to the PTO units 3 each of which comprising a PTO machinery that can be, for instance, a machinery converting wave energy to electric energy or using wave energy to produce fresh water or hydrogen. The reciprocating motion or shorter only motion of the panel 2 and pivot shaft is a back and forth rotating motion.

The piles 6 that support the bottom plate 1 can be, for example, driven, jacked, screwed or hammered into the sea bottom 7. For the sake of simplicity, only a term hammered is used hereinafter. The height the piles 6 above the sea bottom 7 is fitted so that the top of the panel 2 reaches substantially into the vicinity of the water surface 8, and that between the sea bottom 7 and the bottom plate 1 there is a gap 1a at least of a sufficient height for a part of the water to flow under the bottom plate 1 and at the same time to pass the panel 2. This water flow is depicted by an arrow 10. Whereas the water flow 9 above the bottom plate 1 is strongly directed towards the panel 2 improving the capacity of the wave energy capturing. The pile foundation makes it also possible to install the wave recovery apparatus into its production place without preparing the sea bottom 7 before the installation. The piles 6 can also be longer than shown in Figs. 1 and 2. The length of the piles 6 can be fitted so that the wave recovery apparatus according to the invention can be installed almost in all the locations where the depth of sea is, for example, between 8 and 60 meters, even more than that. This feature increases greatly the possible installation places.

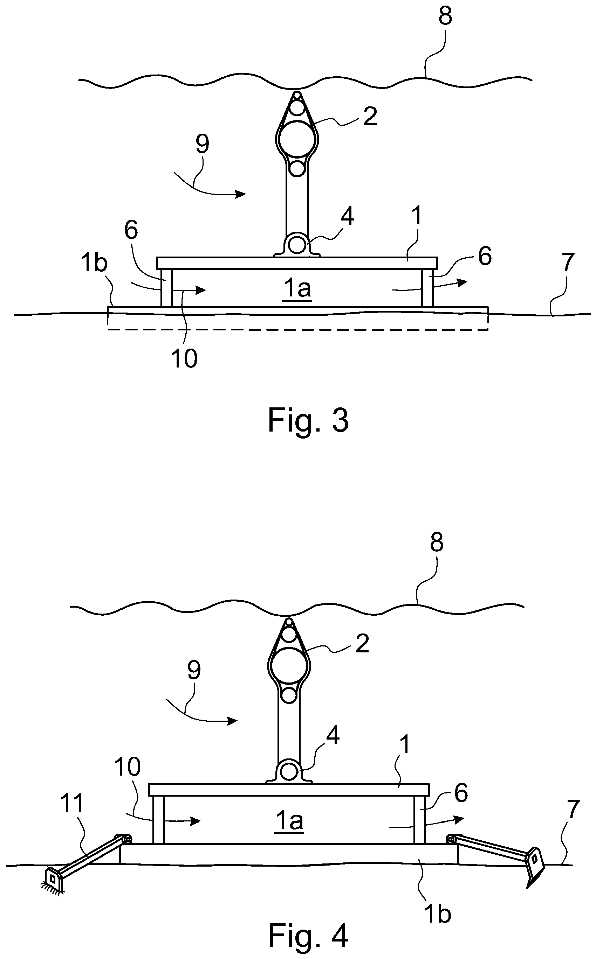

The solution according to Figs. 3 and 4 is otherwise similar to the solution of Figs. 1 and 2 but instead of supporting the piles 6 into the sea bottom 7 the piles 6 now are supported on a second base 1b under the bottom plate 1. The second base 1b can be for example a heavy gravitational base that is placed on the sea bottom 7. This way is advantageous especially when an old gravitational base already exists in its location where a new wave recovery apparatus is installed. The piles 6 in this solutions can also be longer then presented in Fig. 3 in order the make the top of the panel 2 reach into the vicinity of the water surface 8.

The flow control is taken place in the same way as in the solutions according to Figs. 1 and 2. The lower part 10 of the water flow is directed under the bottom plate 1 and the stronger upper part 9 of the water flow is directed towards the panel 2.

In the solution according to Fig. 4 the position of the second base 1b is secured into the sea bottom 7 with mattocks 11, for instance one mattock 11 at each corner of the base 1b. In the situation of Fig. 4 the leftmost mattock 11 is its place in the sea bottom 7 and the rightmost mattock 11 is still above the sea bottom 7. The mattock 11 help the installation of the second base 1b and in some places there is no need to embed the second base 1b deep into the sea bottom 7. In this case also the second base 1b can be a heavy gravitational base.

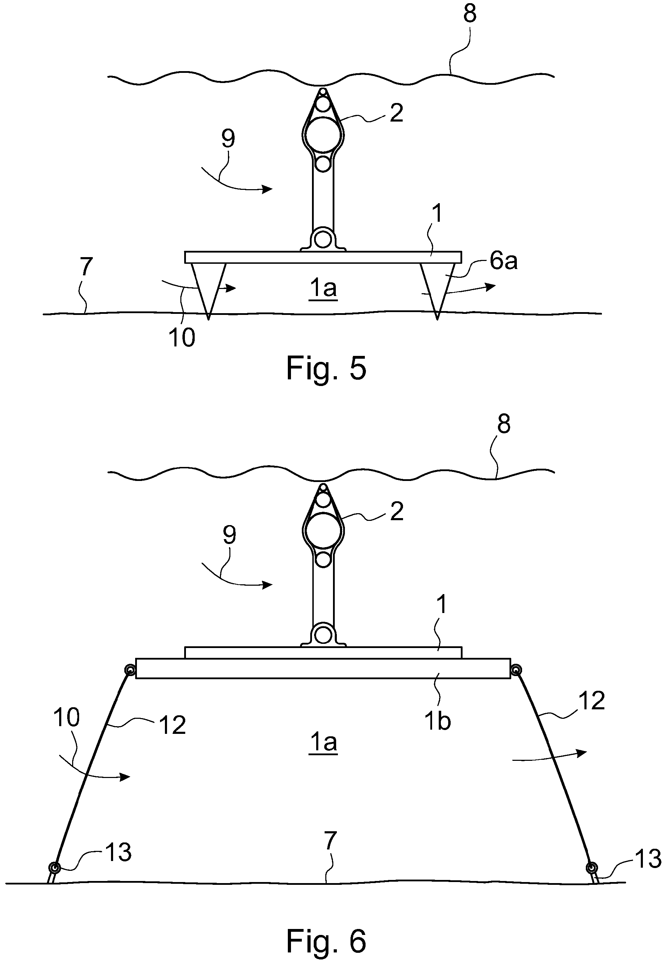

Fig. 5 presents an arrangement according to the invention, where the bottom plate 1 is supported by conical piles 6a embedded into the sea bottom 7. The conical piles 6a are situated for example at each corner of the bottom plate 1, like the piles 6 in the solution of Figs. 1 and 2. The height the conical piles 6a above the sea bottom 7 is fitted so that the top of the panel 2 reaches substantially into the vicinity of the water surface 8, and that between the sea bottom 7 and the bottom plate 1 there is a gap 1a of a sufficient height for a part of water to flow under the bottom plate 1 and at the same time to pass the panel 2. Thus, the flow control is taken place in the same way as in the solutions according to Figs. 1 and 2. The lower part 10 of the water flow is directed under the bottom plate 1 and the stronger upper part 9 of the water flow is directed towards the panel 2.

The conical piles 6a are relatively easy to fit into the uneven sea bottom 7 without being forced to greatly prepare the sea bottom 7. The length of the conical piles 6a is also fitted so that the level of the bottom plate 1 is kept substantially horizontal though the sea bottom 7 is uneven or inclined.

Fig. 6 presents yet another type of arrangement according to the invention. In this solution the bottom plate 1 is fastened onto a second base 1b that is in this embodiment a lightweight floating base that has been anchored into the sea bottom 7 by ropes or wires 12 and the anchors 13. The force of buoyancy tries to raise the second base 1b upwards and so keeps the wires 12 tight. Thanks to that the second base 1b and the bottom plate 1 keep firmly at their place at the height from the sea bottom 7 where again there is a gap 1a of a sufficient height between the combination of the bottom plate 1 and second base 1b and the sea bottom 7, and that the top of the panel 2 reaches substantially into the vicinity of the water surface 8. Here again, the flow control is taken place in the same way as in the solutions according to Figs. 1 and 2. The lower part 10 of the water flow is directed under the combination of the bottom plate 1 and second base 1b and the stronger upper part 9 of the water flow is directed towards the panel 2.

It is also possible that the floating second base 1b and the bottom plate 1 are combined together as one unit. This kind of a structure is not presented in the figures.

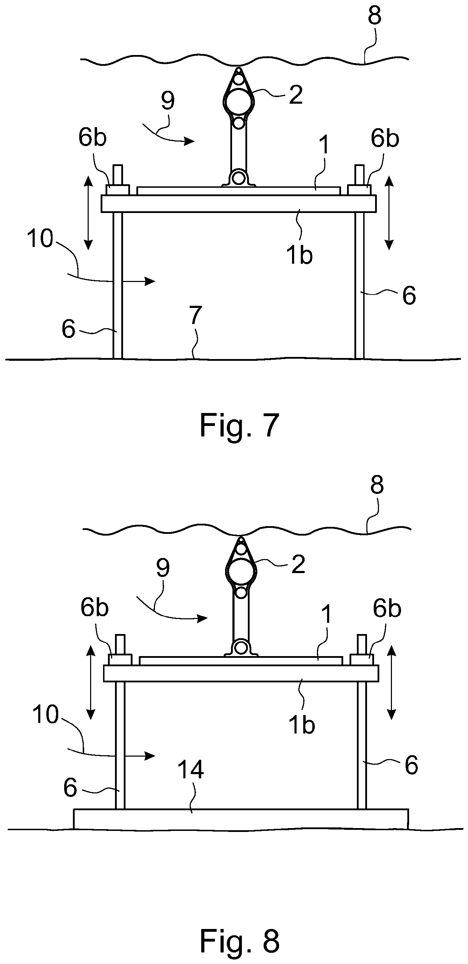

Figs. 7 and 8 present yet another solution of the invention. These solutions comprise long piles 6 that support the second base 1b on which the bottom plate 1 is fastened. The structure of the panel 2 and the rest of the wave recovery apparatus can be for example similar to the structure of the wave recovery apparatus of Figs. 1 and 2. The number of piles 6 can be for instance two, three or four. The arrangement comprises height adjustment means 6b that are arranged to move the second base 6b up and down along the piles 6 depending on the height of the water surface 8 so that the top of the panel 2 reaches substantially into the vicinity of the water surface 8 regardless of the height of the tide. In some usable areas the variation of the height of the tide can be even about 5 meters. Thus, the solution of the arrangement of the invention can also be such that height position of the panel 2 is arranged to vary about 5 meters. The arrangement comprises measuring means to measure the height of the water surface 8 and control means to transmit the height information to the height adjustment means 6b to adjust the height of the panel 2 to the correct height level.

In Fig. 7 the piles 6 are hammered into the sea bottom 7 and in Fig. 8 the piles 6 are fastened on a separate gravitational base 14 installed into the sea bottom 7. Figs. 7 and 8 present a solution that comprise the separate second base 1b and the bottom plate 1 fastened on the second base 1b. However, the bottom plate 1 and the second base 1b can also be only one element. In that case the combined bottom plate 1 and second base 1b form an up and down moving base for the panel 2.

The structure of the arrangement can also be such as in Fig. 8 but the second base 1b is formed as a floating base and the piles 6 are replaced with tension legs, such as ropes, wires or chains. In that case the force of buoyancy tries to raise the second base 1b upwards and so keeps the tension legs tight. Instead of the separate bottom plate 1 and second base 1b they can also be combined as one floating element as mentioned above.

Also in all these structures according to Figs. 7 and 8 the flow control is taken place in the same way as in the solutions according to Figs. 1 and 2. The lower part 10 of the water flow is directed under the bottom plate 1 and the second base 1b and the stronger upper part 9 of the water flow is directed towards the panel 2.

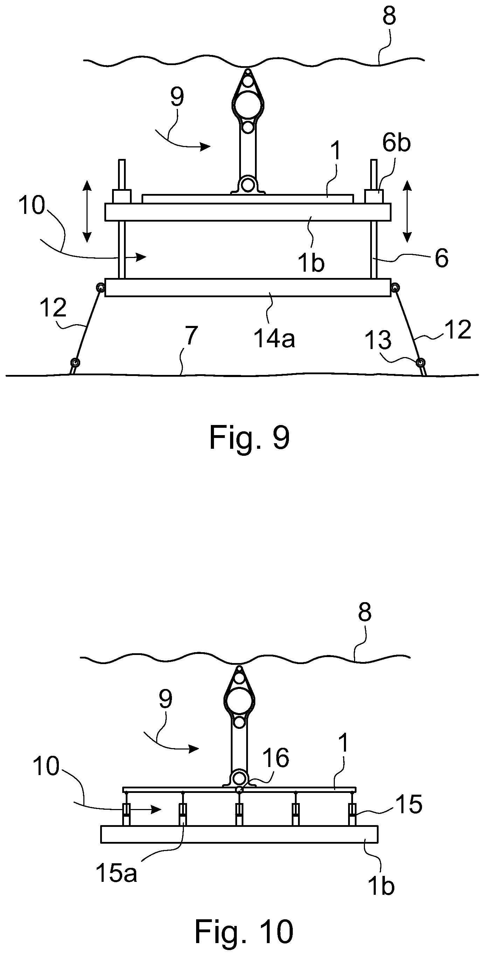

Fig. 9 present a solution according to the invention that is similar to the solutions of Fig. 8 but now the heavy gravitational base 14 has been replaced with a floating lower base 14a that is anchored in the sea bottom 7 by ropes or wires 12 and the anchors 13. The force of buoyancy tries to raise the lower base 14a upwards and so keeps the wires 12 tight. This arrangement comprises also height adjustment means 6b that are arranged to move the second base 1b up and down along the piles 6 depending on the height of the water surface 8 so that the top of the panel 2 reaches substantially into the vicinity of the water surface 8 regardless of the height of the tide, and the gap 1a under the second plate 1b guides a part of the water flow under the second base 1b.

Yet another solution according to the invention is such that the second base 2 is also a floating base and the piles 6 are replaced with tension legs described in connection with the solution of Fig. 8. In that case the force of buoyancy tries to raise the second base 1b upwards and so keeps the tension legs tight.

Instead of the separate bottom plate 1 and second base 1b as shown in the solution according to in Fig. 9 they can also be combined as one floating element as mentioned above.

Also in all these structures according to Fig. 9 the flow control is taken place in the same way as in the solutions according to Figs. 1 and 2. The lower part 10 of the water flow is directed under the bottom plate 1 and the second base 1b and the stronger upper part 9 of the water flow is directed towards the panel 2.

Fig. 10 presents yet another type of arrangement according to the invention. In this case the bottom plate 1 under the panel 2 is supported by a group of hydraulic cylinders 15 that further are supported on the second base 1b. The structure, functions and support of the second base 1b can be similar to those second bases 1b presented in previous figures 3-9. Thus, the second base 1b can be supported, for instance, by piles 6, conical piles 6a or tension legs, and either directly into the sea bottom 7 or on a floating lower base 14a or on a heavy gravitational base 14 lying on the sea bottom 7. In some cases the second base 1b can itself be a heavy gravitational base installed onto the sea bottom 7.

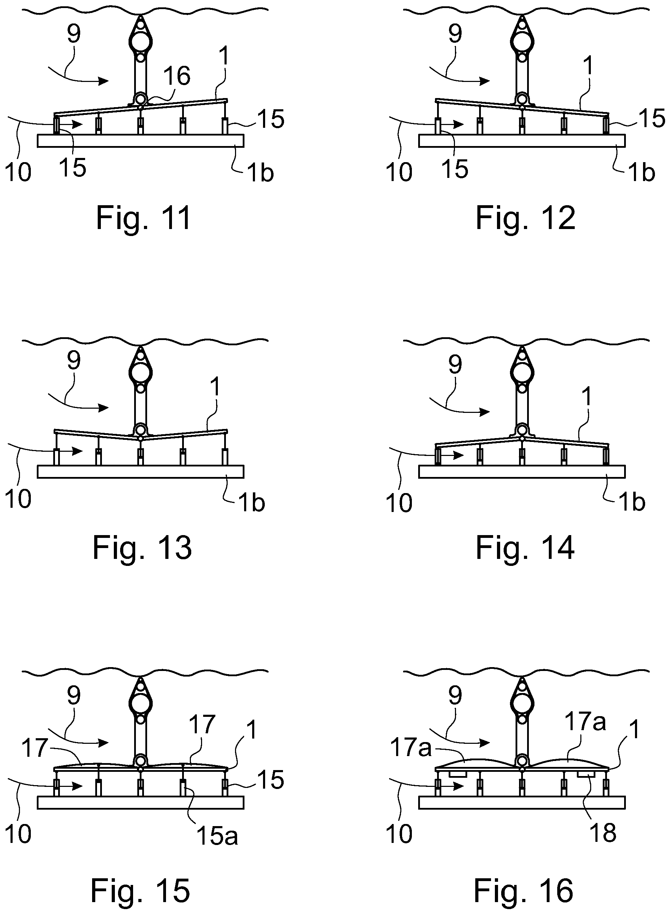

The bottom plate 1 has been divided into two parts or halves that are joined together with a hinge 16 under the panel 2. The hinge line is parallel to the central axis of the pivot shaft of the panel 2 and the hinge 16 is directly under the pivot shaft in the same vertical plane. The hinge 16 makes it possible to incline or bend the halves of the bottom plate 1 irrespective of each other, as is described later in connection with Figs. 11-16.

The solution according to Fig. 10 comprises five symmetrically placed rows of cylinders 15, 15a in the width direction of the bottom plate 1. There is a row of cylinders 15 in the first edge of the bottom plate 1, a row of cylinders 15 under the hinge 16 and a row of cylinders 15 in the second edge of the bottom plate 1. In the length direction of the bottom plate 1 there is also a row of cylinders 15a in the middle of the both halves of the bottom plate 1. These cylinders 15a in the middle of the halves of the bottom plate 1 can support the halves of the bottom plate 1 when the bottom plate 1 is inclined or they can bend the halves of the bottom plate 1 when the profile of the surface of the bottom plate 1 is changed.

Figs. 11-16 present the arrangement according to Fig. 10, where the bottom plate 1 is in different control positions or profile forms. In these figures the left side or the first side is the open sea side where the waves come from, and the right or second side is towards the shore.

In the situation of Fig. 11 the first half of the bottom plate 1 is inclined down towards the open sea and the second half of the bottom plate 1 is inclined up towards the shore. In this case the passing water flow 10 through the gap 1a is smaller and the water flow 9 directed towards the panel 2 is bigger than in normal situations where the bottom plate 1 is in its horizontal position. This position of the bottom plate 1 is advantageous for instance in still sea conditions.

In the situation of Fig. 12 the first half of the bottom plate 1 is inclined up towards the open sea and the second half of the bottom plate 1 is inclined down towards the shore. In this case the passing water flow 10 through the gap 1a is bigger and the water flow 9 directed towards the panel 2 is smaller than in normal situations where the bottom plate 1 is in its horizontal position. This position of the bottom plate 1 is advantageous for instance in stormy sea conditions.

In the situation of Fig. 13 the first half of the bottom plate 1 is inclined up towards the open sea and the second half of the bottom plate 1 is also inclined up towards the shore. Compared to normal situations where the bottom plate 1 is in its horizontal position, in this case the passing water flow 10 through the gap 1a is bigger and the water flow 9 directed towards the panel 2 is smaller in both directions of the wave motion, when the waves come from the open sea and also when the waves come back from the shore. This position of the bottom plate 1 is also advantageous for instance in stormy sea conditions.

In the situation of Fig. 14 the first half of the bottom plate 1 is inclined down towards the open sea and the second half of the bottom plate 1 is also inclined down towards the shore. Compared to normal situations where the bottom plate 1 is in its horizontal position, in this case the passing water flow 10 through the gap 1a is smaller and the water flow 9 directed towards the panel 2 is bigger in both directions of the wave motion, when the waves come from the open sea and also when the waves come back from the shore. This position of the bottom plate 1 is also advantageous for instance in still sea conditions.

Fig. 15 presents the solution according to the invention where the bottom plate 1 is covered with a flexible cover 17, which is arranged to be bent by a hydraulic cylinders 15a situated under the bottom plate 1 substantially in the middle of each half of the bottom plate 1 in a length direction of the bottom plate 1. The cylinders 15a are arranged to push the cover 17 upwards at the middle line of the cover 17 so that the upper surface of the bottom plate 1 forms an upwards directed curvilinear profile, or cylinders 15a are arranged to pull the cover 17 downwards at the middle line of the cover 17 so that the lower surface of the bottom plate 1 forms a downwards directed curvilinear profile.

The structure can also be such that there are separate covers 17 on the upper surface of the bottom plate 1 and on the lower surface of the bottom plate 1. Or there is only one cover 17 either on upper surface of the bottom plate 1 or on the lower surface of the bottom plate 1. Also separate hydraulic cylinders 15a can be used with the cover 17 of the upper surface of the bottom plate 1 and with the cover 17 of the lower surface of the bottom plate 1.

Fig. 16 presents the solution according to the invention where the both halves of the bottom plate 1 are covered with a flexible cover element 17a, that is inflatable or may be filled with other ways. The cover element 17a is arranged to be bent on its upper side by filling it with a pump machinery 18 with water or gas, such as air. The separate cover elements 18 have been installed on both halves of the bottom plate 1 and both of the cover elements 18 have their own filling pump 18.

The same kind of cover elements 17a can also be installed on the lower side of the bottom plate 1.

The pumps 18 are arranged to fill the cover elements 17a so that on the upper side of the bottom plate 1 the cover elements 17a form an upwards curvilinear profile where the highest point is at the middle line of the cover element 17a like in the Fig. 16 or in the area between the middle line of the cover element 17a and the edge of the bottom plate 1. The corresponding downwards curvilinear profile is formed on the lower side of the bottom plate 1.

In the solutions according to Figs. 15 and 16 the surface profile of the bottom plate 1 is arranged to be changed in different ways. The profile change can be made either on both sides of the bottom plate 1 or only on the upper side or only on the lower side of the bottom plate 1.

In the arrangements according to Figs. 10-16 the flow control is in principle taken place in the same way as in the solutions according to Figs. 1 and 2. The lower part 10 of the water flow is directed under the bottom plate 1 and possibly also under the second base 1b and the stronger upper part 9 of the water flow is directed towards the panel 2. In addition the water flow is adjusted by inclining and/or bending the halves of the bottom plate 1. Instead of bending the halves of the bottom plate 1 their surface profile can also be changed in other ways as described above.

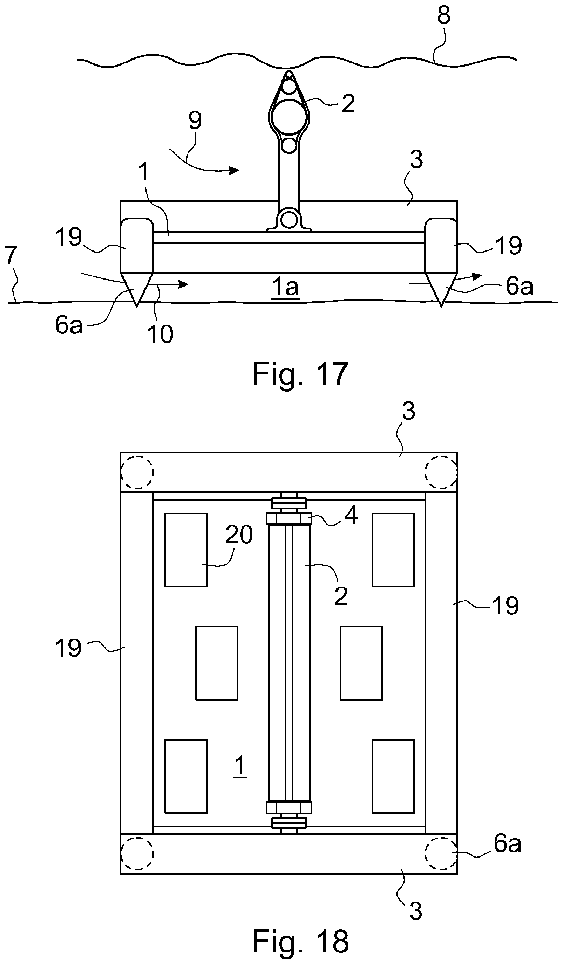

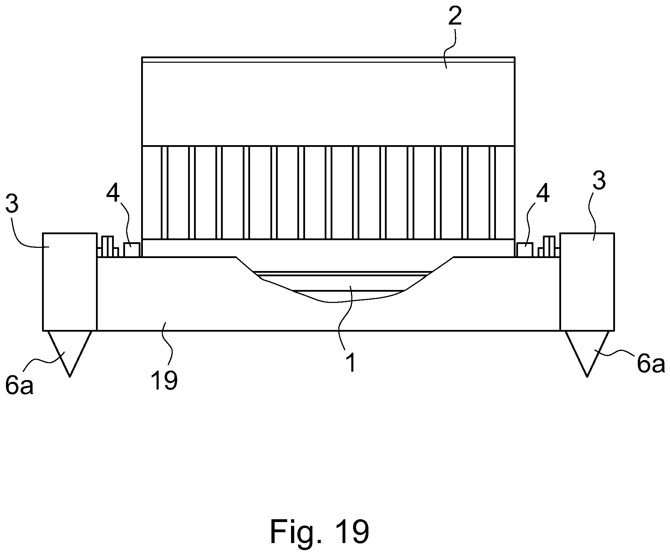

Figs. 17-19 present yet another type of arrangement according to the invention. In that case the arrangement is supported by the conical piles 6a embedded into the sea bottom 7. For the sake of clarity in Fig. 17 the foremost PTO unit has been removed and in Fig. 19 the connecting tank 19 in front is partially sectioned.

The height of the conical piles 6a are fitted so that there is a sufficient gap 1a between the bottom plate 1 and the sea bottom 7. The arrangement comprises two PTO units 3, one at each end of the pivot shaft of the panel 2. The arrangement now comprises connecting tanks 19 on both ends of the bottom plate 1, situated between the PTO units 3. The connecting tanks 19 are fastened at their both ends into the casings of the PTO units 3. In that way the PTO units 3 and the connecting tanks 19 form a rigid, substantially square frame around the bottom plate 1 and the panel 2. In addition the connecting tanks 19 are filled with water or with material heavier than water to make it sure that the arrangement stays steadily at its production place on the sea bottom 2. Thus, the connecting tanks 19 act as additional weights. In order to control the water flow the bottom plate comprises hatches 20 that are arranged to be opened depending of the sea conditions. For instance, in stormy conditions the hatches 20 are opened so that a part of the water flow can go through the hatches 20 to the gap 1a. The hatches 20 may also be such that they open automatically when the swell of the sea becomes too rough.

It is common to all of the embodiments of the invention that the panel 2 is installed on the first base 1 or the bottom plate 1 that acts as a flow control plate so that a first part of the water flow is guided under the bottom plate 1 and a second part of the water flow is directed towards the panel 2. Therefore there is the gap 1a under the bottom plate 1, either directly between the bottom plate 1 and the sea bottom 7 or between the bottom plate 1 and the second base 1b or between the bottom plate 1 and another type of a base. In addition the flow control can be improved by inclining the bottom plate 1 and/or changing the surface profile of the bottom plate 1.

In Figs. 2-16 the PTO units 3 have not been presented for the sake of clarity.

It is obvious to the person skilled in the art that the invention is not restricted to the examples described above but that it may be varied within the scope of the claims presented below. Thus, for example, the structure of the bottom plate can be different from what is presented.

It is also obvious to the person skilled in the art that the piles supporting the bottom plate can be replaced with another type of fixed support, for example, with side walls or alike that support the bottom plate on the base under the bottom plate. The side walls can be as long as the bottom plate or the length of the side walls can be shorter than the length of the bottom plate, and short side walls can be several one after the other, however, so placed that the lower part of the water flow can easily run through the gap under the bottom plate.

## Claims

1. Flow control arrangement in a wave energy recovery apparatus comprising at least a first base (1), on which a reciprocating panel (2) is installed, a pivot shaft for the reciprocating panel (2), a control system, and a power-take-off (PTO) unit (3) to convert kinetic energy of waves or tidal currents to another type of energy, the first base (1) is arranged to divide the water flow caused by waves at least into two separate flows, the first flow (9) towards the panel (2) and the second flow (10) to run under the first base (1), and that the arrangement comprises a gap (1a) under the first base (1) through which the second flow (10) is arranged to be guided, **characterized in that** in order to improve the capacity of the wave energy recovery apparatus the arrangement has means (15, 15a, 16, 17, 17a, 18) to change the angle and/or the profile form of the surface of the first base (1).

2. Flow control arrangement in a wave energy recovery apparatus according to claim 1, **characterized in that** the gap (1a) is formed between the first base (1) and the sea bottom (7).

3. Flow control arrangement in a wave energy recovery apparatus according to claim 1, **characterized in that** the gap (1a) is formed between the first base (1) and another base (1b, 14, 14a) that is under the first base (1).

4. Flow control arrangement in a wave energy recovery apparatus according to claim 1, 2 or 3, **characterized in that** arrangement comprises support elements, such as piles (6), conical piles (6a), tension legs, hydraulic cylinders (15, 15a) or other type of support elements to form the gap (1a) of a sufficient height under the first base (1).

5. Flow control arrangement in a wave energy recovery apparatus according to any of the claims above, **characterized in that** the arrangement comprises means to install the wave recovery apparatus in the area of various depths of water so that the top of the panel (2) reaches substantially into the vicinity of the water surface (8).

6. Flow control arrangement in a wave energy recovery apparatus according to claim 5, **characterized in that** the means to install the wave recovery apparatus in the area of various depths of water comprises a set of long piles (6) whose height is fitted so that at each location, irrespective of the depth of water, the top of the panel (2) reaches substantially into the vicinity of the water surface (8).

7. Flow control arrangement in a wave energy recovery apparatus according to any of the claims above, **characterized in that** the arrangement comprises height adjustment means (6b), measuring means to measure the height of the water surface (8) and control means to transmit the height information to the height adjustment means (6b), and that the said means are arranged to move the wave energy recovery apparatus up and down along the piles (6) depending on the height of the water surface (8) so that the top of the panel (2) reaches substantially into the vicinity of the water surface (8) regardless of the height of the tide.

8. Flow control arrangement in a wave energy recovery apparatus according to any of the claims above, **characterized in that** the arrangement comprises a floating base (1b) on which the wave energy recovery apparatus with the panel (2) is installed and which floating base (1b) is anchored into the sea bottom (7) at the height where the top of the panel (2) reaches substantially into the vicinity of the water surface (8).

9. Flow control arrangement in a wave energy recovery apparatus according to any of the claims above, **characterized in that** the arrangement comprises a floating lower base (14a) on which the support piles (6) or tension legs of the wave energy recovery apparatus are installed and which floating lower base (14a) is anchored into the sea bottom (7) at the height where the top of the panel (2) reaches substantially into the vicinity of the water surface (8).

10. Flow control arrangement in a wave energy recovery apparatus according to any of the claims above, **characterized in that** the means to change the angle of the surface of the first base (1) comprises a set of hydraulic cylinders (15, 15a) under the first base (1) and a hinge (16) in the middle line of the first base (1).

11. Flow control arrangement in a wave energy recovery apparatus according to any of the claims above, **characterized in that** the means to change the profile form of the surface of the first base (1) comprises a set of hydraulic cylinders (15a) under the first base (1) and a flexible cover (17) that is arranged to be pushed upwards or pulled downwards with the cylinders (15a).

12. Flow control arrangement in a wave energy recovery apparatus according to any of the claims above, **characterized in that** the means to change the profile form of the surface of the first base (1) comprises a pump machinery (18) and a flexible cover element (17a) on the upper and/or lower surface of the first base (1) to be filled with water or gas, such as air.

13. Flow control arrangement in a wave energy recovery apparatus according to any of the claims above, **characterized in that** the first base (1) comprises one or more hatches (20) to improve the capacity of the wave energy recovery apparatus, and that the hatches (20) are arranged to be opened to the gap (1a) under the first base (1).

14. Flow control arrangement in a wave energy recovery apparatus according to any of the claims above, **characterized in that** the first base (1) is surrounded by a frame formed by two PTO units (3) and two connection tanks (19) fastened together, and where the connection tanks (19) are arranged to be filled with water or material heavier than water.

## Patentansprüche

1. Strömungssteuerungsanordnung in einer Vorrichtung zur Rückgewinnung von Wellenenergie, die mindestens eine erste Basis (1), auf der eine hin- und hergehende Platte (2) installiert ist, eine Schwenkwelle für die hin- und hergehende Platte (2), ein Steuersystem und eine Zapfwelleneinheit (3) zur Umwandlung der kinetischen Energie von Wellen oder Gezeitenströmen in eine andere Energieart umfasst, wobei die erste Basis (1) so angeordnet ist, dass sie den durch Wellen verursachten Wasserstrom mindestens in zwei getrennte Ströme aufteilt, wobei die erste Strömung (9) in Richtung der Platte (2) und die zweite Strömung (10) unter der ersten Basis (1) verläuft, und dass die Anordnung einen Spalt (1a) unter der ersten Basis (1) umfasst, durch den die zweite Strömung (10) geführt wird, **dadurch gekennzeichnet, dass** zur Verbesserung der Kapazität der Wellenenergie-Rückgewinnungsvorrichtung die Anordnung Mittel (15, 15a, 16, 17, 17a, 18) zur Änderung des Winkels und/oder der Profilform der Oberfläche der ersten Basis (1) aufweist.

2. Strömungssteuerungsanordnung in einer Vorrichtung zur Rückgewinnung von Wellenenergie nach Anspruch 1, **dadurch gekennzeichnet, dass** der Spalt (1a) zwischen der ersten Basis (1) und dem Meeresboden (7) gebildet ist.

3. Strömungssteuerungsanordnung in einer Vorrichtung zur Rückgewinnung von Wellenenergie nach Anspruch 1, **dadurch gekennzeichnet, dass** der Spalt (1a) zwischen der ersten Basis (1) und einer weiteren Basis (1b, 14, 14a), die sich unter der ersten Basis (1) befindet, gebildet ist.

4. Strömungssteuerungsanordnung in einer Vorrichtung zur Rückgewinnung von Wellenenergie nach Anspruch 1, 2 oder 3, **dadurch gekennzeichnet, dass** die Anordnung Stützelemente, wie Pfähle (6), konische Pfähle (6a), Spannbeine, Hydraulikzylinder (15, 15a) oder andere Arten von Stützelementen umfasst, um den Spalt (1a) mit ausreichender Höhe unter der ersten Basis (1) zu bilden.

5. Strömungssteuerungsanordnung in einer Vorrichtung zur Rückgewinnung von Wellenenergie gemäß einem der obigen Ansprüche, **dadurch gekennzeichnet, dass** die Anordnung Mittel zum Installieren der Wellenenergie-Rückgewinnungsvorrichtung im Bereich verschiedener Tiefen von Wasser umfasst, so dass die Oberseite der Platte (2) im Wesentlichen bis in die Nähe der Wasseroberfläche (8) reicht.

6. Strömungssteuerungsanordnung in einer Vorrichtung zur Rückgewinnung von Wellenenergie nach Anspruch 5, **dadurch gekennzeichnet, dass** die Mittel zum Installieren des Wellenenergie-Rückgewinnungsgerätes im Bereich verschiedener Wassertiefen einen Satz langer Pfähle (6) umfassen, deren Höhe so angepasst ist, dass an jeder Stelle, unabhängig von der Wassertiefe, die Oberseite der Platte (2) im Wesentlichen bis in die Nähe der Wasseroberfläche (8) reicht.

7. Strömungssteuerungsanordnung in einer Vorrichtung zur Rückgewinnung von Wellenenergie gemäß irgendeinem der obigen Ansprüche, **dadurch gekennzeichnet, dass** die Anordnung eine Höheneinstelleinrichtung (6b), eine Messeinrichtung zum Messen der Höhe der Wasseroberfläche (8) und eine Steuereinrichtung zum übertragen der Höheninformation zu der Höheneinstelleinrichtung (6b) aufweist, und dass die Einrichtung so angeordnet ist, dass sie die Wellenenergie-Rückgewinnungsvorrichtung entlang der Pfähle (6) in Abhängigkeit von der Höhe der Wasseroberfläche (8) auf und ab bewegt, so dass die Oberseite der Platte (2) unabhängig von der Höhe der Flut im wesentlichen in die Nähe der Wasseroberfläche (8) reicht.

8. Strömungssteuerungsanordnung in einer Vorrichtung zur Rückgewinnung von Wellenenergie gemäß einem der obigen Ansprüche, **dadurch gekennzeichnet, dass** die Anordnung eine schwimmende Basis (1b) umfasst, auf der die Wellenenergie-Rückgewinnungsvorrichtung mit der Platte (2) installiert ist und die schwimmende Basis (1b) im Meeresboden (7) in der Höhe verankert ist, in der die Oberseite der Platte (2) im wesentlichen in die Nähe der Wasseroberfläche (8) reicht.

9. Strömungssteuerungsanordnung in einer Vorrichtung zur Rückgewinnung von Wellenenergie gemäß einem der obigen Ansprüche, **dadurch gekennzeichnet, dass** die Anordnung eine schwimmende untere Basis (14a) umfasst, auf der die Stützpfähle (6) oder Spannbeine der Wellenenergie-Rückgewinnungsvorrichtung installiert sind, und wobei die schwimmende untere Basis (14a) im Meeresboden (7) in der Höhe verankert ist, in der die Oberseite der Platte (2) im wesentlichen in die Nähe der Wasseroberfläche (8) reicht.

10. Strömungssteuerungsanordnung in einer Vorrichtung zur Rückgewinnung von Wellenenergie nach einem der obigen Ansprüche, **dadurch gekennzeichnet, dass** das Mittel zur Änderung des Winkels der Oberfläche der ersten Basis (1) einen Satz von Hydraulikzylindern (15, 15a) unter der ersten Basis (1) und ein Scharnier (16) in der Mittellinie der ersten Basis (1) umfasst.

11. Strömungssteuerungsanordnung in einer Vorrichtung zur Rückgewinnung von Wellenenergie nach einem der obigen Ansprüche, **dadurch gekennzeichnet, dass** die Mittel zum Ändern der Profilform der Oberfläche der ersten Basis (1) einen Satz von Hydraulikzylindern (15a) unter der ersten Basis (1) und eine flexible Abdeckung (17) umfassen, die so angeordnet ist, dass sie mit den Zylindern (15a) nach oben gedrückt oder nach unten gezogen werden kann.

12. Strömungssteuerungsanordnung in einer Vorrichtung zur Rückgewinnung von Wellenenergie nach einem der obigen Ansprüche, **dadurch gekennzeichnet, dass** das Mittel zur Änderung der Profilform der Oberfläche der ersten Basis (1) eine Pumpenmaschine (18) und ein flexibles Abdeckelement (17a) auf der oberen und/oder unteren Oberfläche der ersten Basis (1) umfasst, das mit Wasser oder Gas, wie Luft, gefüllt werden soll.

13. Strömungssteuerungsanordnung in einer Vorrichtung zur Rückgewinnung von Wellenenergie gemäß einem der obigen Ansprüche, **dadurch gekennzeichnet, dass** die erste Basis (1) eine oder mehrere Luken (20) zur Verbesserung der Kapazität der Wellenenergie-Rückgewinnungsvorrichtung umfasst, und dass die Luken (20) so angeordnet sind, dass sie zu dem Spalt (1a) unter der ersten Basis (1) geöffnet werden können.

14. Strömungssteuerungsanordnung in einer Vorrichtung zur Rückgewinnung von Wellenenergie nach einem der obigen Ansprüche, **dadurch gekennzeichnet, dass** die erste Basis (1) von einem Rahmen umgeben ist, der von zwei PTO-Einheiten (3) und zwei Verbindungstanks (19) gebildet wird, die miteinander befestigt sind, und wobei die Verbindungstanks (19) so angeordnet sind, dass sie mit Wasser oder einem Material, das schwerer als Wasser ist, gefüllt werden können.

## Revendications

1. Agencement de commande de flux dans un appareil de récupération d'énergie houlomotrice comprenant au moins une première base (1), sur laquelle un panneau alternatif (2) est installé, un arbre de pivot pour le panneau alternatif (2), un système de commande, et une unité de prise de force (PTO) (3) pour convertir une énergie cinétique de vagues ou courants de marée en un autre type d'énergie, la première base (1) est agencée pour diviser le flux d'eau provoqué par des vagues en au moins deux flux séparés, le premier flux (9) vers le panneau (2) et le second flux (10) pour passer sous la première base (1), et que l'agencement comprend un espace (1a) sous la première base (1) à travers lequel le second flux (10) est agencé pour être guidé, **caractérisé en ce que** pour améliorer la capacité de l'appareil de récupération d'énergie houlomotrice, l'agencement présente des moyens (15, 15a, 16, 17, 17a, 18) pour changer l'angle et/ou la forme de profil de la surface de la première base (1).

2. Agencement de commande de flux dans un appareil de récupération d'énergie houlomotrice selon la revendication 1, **caractérisé en ce que** l'espace (1a) est formé entre la première base (1) et le fond marin (7).

3. Agencement de commande de flux dans un appareil de récupération d'énergie houlomotrice selon la revendication 1, **caractérisé en ce que** l'espace (1a) est formé entre la première base (1) et une autre base (1b, 14, 14a) qui se trouve sous la première base (1).

4. Agencement de commande de flux dans un appareil de récupération d'énergie houlomotrice selon la revendication 1, 2 ou 3, **caractérisé en ce que** l'agencement comprend des éléments de support, tels que des pieux (6), des pieux coniques (6a), des jambes de tension, des vérins hydrauliques (15, 15a) ou autre type d'éléments de support pour former l'espace (1a) d'une hauteur suffisante sous la première base (1).

5. Agencement de commande de flux dans un appareil de récupération d'énergie houlomotrice selon l'une quelconque des revendications ci-dessus, **caractérisé en ce que** l'agencement comprend des moyens pour installer l'appareil de récupération houlomotrice dans la zone de différentes profondeurs d'eau de sorte que le haut du panneau (2) atteint sensiblement le voisinage de la surface de l'eau (8).

6. Agencement de commande de flux dans un appareil de récupération d'énergie houlomotrice selon la revendication 5, **caractérisé en ce que** les moyens pour installer l'appareil de récupération houlomotrice dans la zone de différentes profondeurs d'eau comprennent un ensemble de longs pieux (6) dont la hauteur est ajustée de sorte qu'à chaque emplacement, quelle que soit la profondeur d'eau, le haut du panneau (2) atteint sensiblement le voisinage de la surface de l'eau (8).

7. Agencement de commande de flux dans un appareil de récupération d'énergie houlomotrice selon l'une quelconque des revendications ci-dessus, **caractérisé en ce que** l'agencement comprend des moyens d'ajustement de hauteur (6b), des moyens de mesure pour mesurer la hauteur de la surface de l'eau (8) et des moyens de commande pour transmettre les informations de hauteur aux moyens d'ajustement de hauteur (6b), et **en ce que** lesdits moyens sont agencés pour déplacer l'appareil de récupération d'énergie houlomotrice vers le haut et le bas le long des pieux (6) en fonction de la hauteur de la surface de l'eau (8) de sorte que le haut du panneau (2) atteint sensiblement le voisinage de la surface de l'eau (8) quelle que soit la hauteur de la marée.

8. Agencement de commande de flux dans un appareil de récupération d'énergie houlomotrice selon l'une quelconque des revendications ci-dessus, **caractérisé en ce que** l'agencement comprend une base flottante (1b) sur laquelle est installé l'appareil de récupération d'énergie houlomotrice avec le panneau (2) et laquelle base flottante (1b) est ancrée dans le fond marin (7) à la hauteur où le haut du panneau (2) atteint sensiblement le voisinage de la surface de l'eau (8).

9. Agencement de commande de flux dans un appareil de récupération d'énergie houlomotrice selon l'une quelconque des revendications ci-dessus, **caractérisé en ce que** l'agencement comprend une base inférieure flottante (14a) sur laquelle sont installés les pieux de support (6) ou des jambes de tension de l'appareil de récupération d'énergie houlomotrice et laquelle base inférieure flottante (14a) est ancrée dans le fond marin (7) à la hauteur à laquelle le haut du panneau (2) atteint sensiblement le voisinage de la surface de l'eau (8).

10. Agencement de commande de flux dans un appareil de récupération d'énergie houlomotrice selon l'une quelconque des revendications ci-dessus, **caractérisé en ce que** les moyens pour changer l'angle de la surface de la première base (1) comprennent un ensemble de vérins hydrauliques (15, 15a) sous la première base (1) et une charnière (16) dans la ligne médiane de la première base (1).

11. Agencement de commande de flux dans un appareil de récupération d'énergie houlomotrice selon l'une quelconque des revendications ci-dessus, **caractérisé en ce que** les moyens pour changer la forme de profil de la surface de la première base (1) comprennent un ensemble de vérins hydrauliques (15a) sous la première base (1) et un couvercle flexible (17) qui est agencé pour être poussé vers le haut ou tiré vers le bas avec les vérins (15a).

12. Agencement de commande de flux dans un appareil de récupération d'énergie houlomotrice selon l'une quelconque des revendications ci-dessus, **caractérisé en ce que** les moyens pour changer la forme de profil de la surface de la première base (1) comprennent une machinerie de pompage (18) et un élément de couvercle flexible (17a) sur la surface supérieure et/ou inférieure de la première base (1) à remplir d'eau ou de gaz, tel que de l'air.

13. Agencement de commande de flux dans un appareil de récupération d'énergie houlomotrice selon l'une quelconque des revendications ci-dessus, **caractérisé en ce que** la première base (1) comprend une ou plusieurs trappes (20) pour améliorer la capacité de l'appareil de récupération d'énergie houlomotrice, et **en ce que** les trappes (20) sont agencées pour être ouvertes vers l'espace (1a) sous la première base (1).

14. Agencement de commande de flux dans un appareil de récupération d'énergie houlomotrice selon l'une quelconque des revendications ci-dessus, **caractérisé en ce que** la première base (1) est entourée d'un cadre formé par deux unités PTO (3) et deux réservoirs de connexion (19) fixés ensemble, et où les réservoirs de connexion (19) sont agencés pour être remplis d'eau ou d'un matériau plus lourd que l'eau.
